# EUROPEAN PATENT APPLICATION

(11) **EP 4 510 053 A1**
(43) Date of publication of application: **19.02.2025**
(21) Application number: 23788175.0
(22) Date of filing: 30.03.2023
(51) Int. Cl.: G06Q 10/047, G06Q 10/083

(54) **DELIVERY PLAN GENERATION DEVICE AND DELIVERY PLAN GENERATION METHOD**

(30) Priority: 15.04.2022 JP 2022067717
(71) Applicant: Panasonic Intellectual Property Management Co., Ltd., Osaka-shi, Osaka 540-6207 (JP)
(72) Inventor: YAMAGUCHI, Koichiro, Kadoma-shi, Osaka 571-0057 (JP); SAITO Ryota, Kadoma-shi, Osaka 571-0057 (JP)
(74) Representative: Eisenführ Speiser
(86) International application number: PCT/JP2023/013446
(87) International publication number: WO 2023/199755

(57) **Abstract**

This delivery plan generation device, which divides a delivery range into prescribed unit areas and generates a delivery route for each of a plurality of individuals in charge to which delivery destinations of products are allocated, comprises a provision unit which: repetitively executes the generation of the delivery route, which is identified by connecting unit areas each including one or more delivery destinations, for each of the plurality of individuals in charge and a process of leveling deliveries included in the delivery route of each of the plurality of individuals in charge; and provides a setting screen through which a user is caused to input setting items that are used when the delivery route of each of the plurality of individuals in charge is generated.

## Description

### TECHNICAL FIELD

The present disclosure relates to a delivery plan generation device and a delivery plan generation method that support delivery of a plurality of packages as delivery targets.

### BACKGROUND ART

As a prior art for performing a delivery plan of a product, for example, Patent Literature 1 is mentioned. Patent Literature 1 discloses a method of generating an optimal delivery route by using a mesh method to divide a delivery range into meshes and using the shortest distance condition to connect the meshes with one stroke.

### CITATION LIST

### PATENT LITERATURE

Patent Literature 1: JPH10-134300A

### SUMMARY OF INVENTION

### TECHNICAL PROBLEM

The present disclosure has been made in view of the above situation in the related art, and an object of the present disclosure is to provide a delivery plan generation device and a delivery plan generation method that generate a delivery plan which restrains deviation in workloads of delivery persons while restraining an execution time of entire delivery by balancing delivery routes of packages between the delivery persons.

### SOLUTION TO PROBLEM

The present disclosure provides a delivery plan generation device that divides a delivery range into predetermined unit areas and generates a delivery route of each of a plurality of persons to whom delivery destinations of articles are assigned, the delivery plan generation device includes a providing unit configured to provide a setting screen on which a user inputs a setting item to be used at the time of generating the delivery route of each of the plurality of persons, which is specified by connecting unit areas each including one or more delivery destinations, by repeatedly executing the generation of the delivery route of each of the plurality of persons and a process of balancing delivery included in the delivery route of each of the plurality of persons.

Further, the present disclosure provides a delivery plan generation method that divides a delivery range into predetermined unit areas and generates a delivery route of each of a plurality of persons to whom delivery destinations of articles are assigned, in which a processor and a memory cooperate to provide a setting screen on which a user inputs a setting item to be used at the time of generating the delivery route of each of the plurality of persons, which is specified by connecting unit areas each including one or more delivery destinations, by repeatedly executing the generation of the delivery route of each of the plurality of persons and a process of balancing delivery included in the delivery route of each of the plurality of persons.

### ADVANTAGEOUS EFFECTS OF INVENTION

According to the present disclosure, it is possible to generate a delivery plan that restrains deviation in workloads of delivery persons while restraining an execution time of entire delivery by balancing delivery routes of packages between the delivery persons.

### BRIEF DESCRIPTION OF DRAWINGS

FIG. 1 is a block diagram showing an example of a system configuration according to Embodiment 1 of the present invention.
FIGs. 2A and 2B are conceptual diagrams for explaining meshes according to Embodiment 1 of the present invention.
FIGs. 3A to 3D are conceptual diagrams for explaining aggregation of a delivery plan according to Embodiment 1 of the present invention.
FIG. 4 is an explanatory diagram for explaining a method of the delivery plan according to Embodiment 1 of the present invention.
FIG. 5 is an explanatory diagram for explaining the method of the delivery plan according to Embodiment 1 of the present invention.
FIG. 6 is an explanatory diagram for explaining the method of the delivery plan according to Embodiment 1 of the present invention.
FIG. 7 is a flowchart of a delivery plan generation process according to Embodiment 1 of the present invention.
FIG. 8 is a flowchart of a delivery plan calculation process according to Embodiment 1 of the present invention.
FIG. 9 is a diagram showing a configuration example of a UI screen of a delivery plan generation device according to Embodiment 1 of the present invention.
FIG. 10 is a diagram showing a configuration example of a UI screen of the delivery plan generation device according to Embodiment 1 of the present invention.
FIG. 11 is a diagram showing a configuration example of a UI screen of the delivery plan generation device according to Embodiment 1 of the present invention.
FIG. 12 is a diagram showing an example of a data configuration used in the delivery plan generation device according to Embodiment 1 of the present invention.
FIGs. 13A and 13B are diagrams showing configuration examples of UI screens of the delivery plan generation device according to Embodiment 1 of the present invention.
FIG. 14 is a diagram showing a configuration example of a UI screen of the delivery plan generation device according to Embodiment 1 of the present invention.
FIG. 15 is a diagram showing a configuration example of a UI screen of the delivery plan generation device according to Embodiment 1 of the present invention.
FIG. 16 is a diagram showing a configuration example of a UI screen of the delivery plan generation device according to Embodiment 1 of the present invention.
FIG. 17 is a diagram showing a configuration example of a UI screen of the delivery plan generation device according to Embodiment 1 of the present invention.

### DESCRIPTION OF EMBODIMENTS

### (Background of Contents of Embodiments)

In Patent Literature 1 described above, determination of a delivery route and determination of, for example, the type and number of necessary delivery vehicles are automatically performed with respect to unit areas using a mesh method, thereby achieving reduction in delivery cost and efficiency of delivery. However, regarding a plurality of delivery persons, generation of deviation in workloads thereof and balancing of the workloads are not considered. In an actual site, a huge amount of articles are delivered by a plurality of delivery persons (drivers), and determination of the delivery route for each driver and balancing of the number of times of delivery of each driver and the like cannot be performed by only an optimal delivery route in a predetermined delivery range. In particular, the number of delivery destinations included in a unit area of a mesh varies depending on a situation, and thus the accuracy of the balancing decreases. In addition, the convenience of a UI screen and the like that can be used when the delivery persons actually perform the delivery is not considered in Patent Literature 1.

Further, it is not considered to perform a delivery plan in consideration of a schedule, a skill, a historical work result, and the like of each delivery person. Therefore, although it is possible to calculate a delivery route at a certain time point, work sharing reflecting the historical work result and the like cannot be achieved in Patent Literature 1.

Therefore, in the following embodiments, examples of a delivery plan generation device and a delivery plan generation method, which can generate a delivery plan that restrains deviation in workloads of delivery persons while restraining an execution time of entire delivery by balancing works of the delivery persons, will be described.

Hereinafter, the embodiments specifically disclosing the delivery plan generation device and the delivery plan generation method according to the present disclosure will be described in detail with reference to the drawings as appropriate. However, unnecessarily detailed description may be omitted. For example, detailed description of well-known matters and redundant description of substantially the same configuration may be omitted. This is to avoid the following description from being unnecessarily redundant and facilitate understanding for a person skilled in the art. The accompanying drawings and the following description are provided for a person skilled in the art to fully understand the present disclosure, and are not intended to limit the subject matters described in the claims.

### <Embodiment 1>

Hereinafter, an example in which a delivery plan in a case of delivering a plurality of packages is formulated (generated) will be described as Embodiment 1 of the present invention. In the present embodiment, the delivery plan is a plan for a delivery route when packages (articles) are delivered from a site to a plurality of delivery destinations by using at least one delivery vehicle (for example, a truck) during a predetermined period (for example, during a single day, that is, the current day). The delivery route corresponds to a traveling order of the plurality of delivery destinations. When the delivery plan is generated, for example, the delivery plan is determined based on a road cost such that a delivery cost thereof is reduced.

### [Device Configuration]

A delivery plan generation device 100 according to the present embodiment is communicably connected to one or more client terminals 200 via a network 300. The delivery plan generation device 100 may be configured as an on-premise server device at a site of a delivery agent, and may be configured as a cloud server device on a network.

The delivery plan generation device 100 includes a processing unit 110, a storage unit 120, a user interface (UI) unit 130, and a communication unit 140. The processing unit 110 may be a processor implemented by using, for example, a central processing unit (CPU), a graphical processing unit (GPU), a micro processing unit (MPU), a digital signal processor (DSP), or a field-programmable gate array (FPGA). The processing unit 110 achieves various functions to be described later, for example, by referring to various databases (hereinafter, DB) stored in the storage unit 120 or reading out programs. The storage unit 120 is a storage unit for storing various data, programs, and the like, and may be implemented by, for example, a volatile/nonvolatile storage device such as a random access memory (RAM), a read only memory (ROM), or a hard disk drive (HDD).

The UI unit 130 is a unit for receiving an operation by a user of the delivery plan generation device 100 and outputting various types of information. The UI unit 130 may be implemented by a display, a mouse, a keyboard, or the like. The communication unit 140 is an interface for communicating with an external device via the network 300. A communication standard available to the communication unit 140 is not particularly limited, and may be wired/wireless. Further, a plurality of communication standards may be available to the communication unit 140.

The client terminal 200 is a terminal device that can be used by the delivery person during a delivery work, and may be, for example, a mobile terminal such as a smartphone, a tablet terminal, and a POS terminal. Further, the client terminal 200 may be provided in the delivery vehicle (hereinafter, also simply referred to as a "vehicle") to be used during the delivery. The client terminal 200 includes a processing unit 201, a storage unit 202, a communication unit 203, a UI unit 204, and a sensor unit 205.

The processing unit 201 may be implemented by using, for example, a CPU, a GPU, an MPU, a DSP, or an FPGA. The processing unit 201 achieves various functions to be described later, for example, by referring to various data stored in the storage unit 202 or reading out programs. The storage unit 202 is a storage unit for storing various data, programs, and the like, and may be implemented by, for example, a volatile/nonvolatile storage device such as a RAM, a ROM, an HDD, a flash memory, or a solid state drive (SSD).

The communication unit 203 is an interface for wirelessly communicating with an external device via the network 300. A communication standard available to the communication unit 203 is not particularly limited. The sensor unit 205 includes one or more sensors for detecting state information on the client terminal 200, and may include, for example, a position sensor based on a global navigation satellite system (GNSS) represented by a global positioning system (GPS), a magnetic sensor, an acceleration sensor, a camera as an imaging device, and the like.

In the present embodiment, the processing unit 110 of the delivery plan generation device 100 includes a road cost calculation unit 111, a delivery cost generation unit 112, a delivery plan calculation unit 113, a screen generation unit 114, a DB management unit 115, and a data association unit 116. A configuration of a functional block is an example, and a function of one block may be divided in more detail, and functions of a plurality of blocks may be collectively configured.

The road cost calculation unit 111 calculates a cost of a road used as the delivery route. The delivery cost generation unit 112 calculates the delivery cost based on the road cost, a size of a package as a delivery target, and the like. The delivery plan calculation unit 113 calculates a delivery plan for the package based on the delivery cost and the road cost. The screen generation unit 114 generates various UI screens to be provided to the delivery plan generation device 100 and the client terminal 200. The DB management unit 115 updates and manages various DBs included in the storage unit 120. The data association unit 116 acquires and provides various types of information necessary for the delivery plan from an external device (the client terminal 200 or other external devices).

In the present embodiment, the storage unit 120 of the delivery plan generation device 100 includes a road information DB 121, a delivery information DB 122, and a person information DB 123. A configuration of a DB is an example, and one DB may be divided in more detail, and a plurality of DBs may be collectively configured.

The road information DB 121 is a database for managing road information and map information on a delivery area. The road information and the map information may be updated by, for example, accessing an external map server (not shown) and acquiring latest information. The road information may include, in addition to a road shape, information on a traffic congestion situation or on whether traveling is possible, a previous travel history, and the like. The cost of each road is defined based on the information. The delivery information DB 122 is a database for managing delivery information on the packages as the delivery targets. The delivery information may include a delivery destination, a delivery source, a delivery site, a delivery date and time, and the like. The person information DB 123 is a database for managing information on the delivery person. The person information may include a delivery history, a work schedule, a current position during delivery of the assigned delivery person, a delivery skill of the person, and the like.

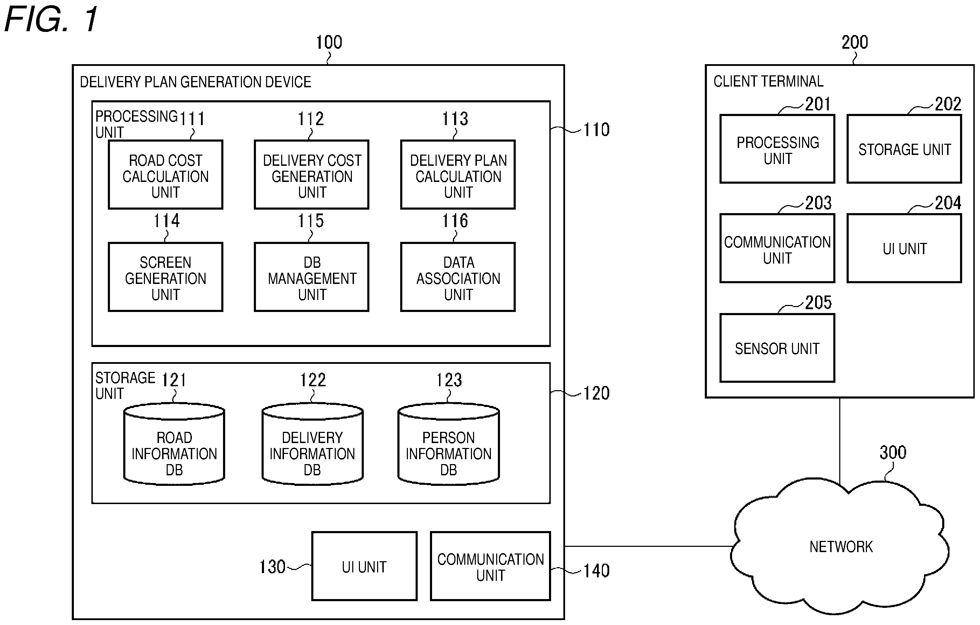

When the delivery plan generation device 100 is used via the client terminal 200, the delivery plan generation device 100 may be accessed by using a Web browser (not shown) included in the client terminal 200, and the delivery plan generation device 100 may be used by activating an application that corresponds to the delivery plan generation device 100 and is installed in the client terminal 200. Further, allocation of the functions of the delivery plan generation device 100 and the client terminal 200 is not limited to the configuration in FIG. 1, and a part of the functions of the delivery plan generation device 100 may be implemented on a client terminal 200 side.

### [Aggregation of Mesh]

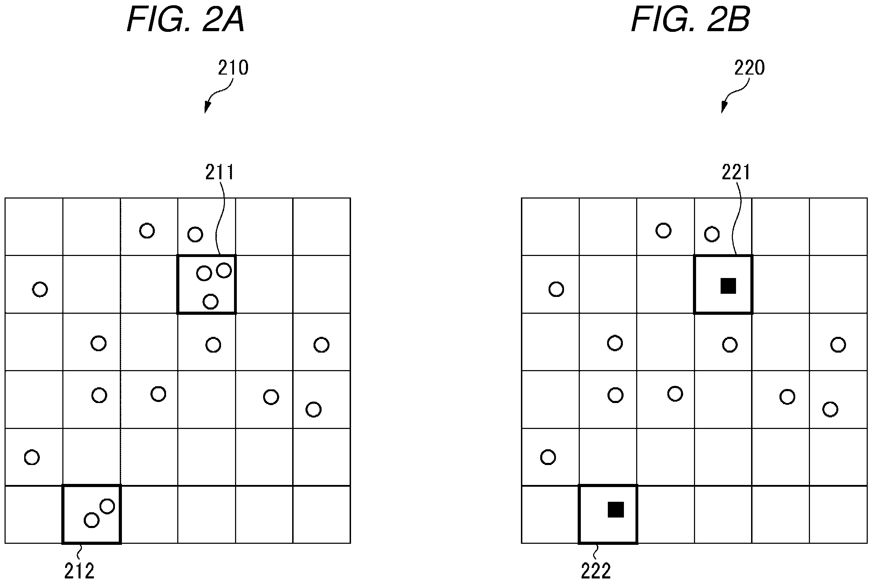

FIGs. 2A and 2B are conceptual diagrams for explaining aggregation of a mesh according to the present embodiment. A mesh 210 in FIG. 2A indicates a state before the aggregation, and a mesh in FIG. 2B indicates a state after the aggregation. Here, an example of a mesh in the form of 6 × 6 (36 unit areas in total) set on a map is shown. Horizontal and vertical sizes of one unit area of the mesh are not particularly limited, and any values forming a rectangle may be set. In FIGs. 2A and 2B, one circle indicates one delivery destination. In FIG. 2A, a unit area 211 includes three delivery destinations. Further, a unit area 212 includes two delivery destinations. When a case in which a plurality of delivery destinations are included in one unit area is included in the aggregation, the delivery destinations are collected (aggregated) for each unit area. For example, the unit area 211 in FIGA. 2 becomes a unit area 221 in FIG. 2B by aggregating the three delivery destinations. In FIGs. 2A and 2B, the aggregated delivery destinations are indicated by a square. Similarly, the unit area 212 in FIG. 2A becomes a unit area 222 in FIG. 2B by aggregating the two delivery destinations. Accordingly, handling at the time of path generation can be simplified, and a processing load can be reduced.

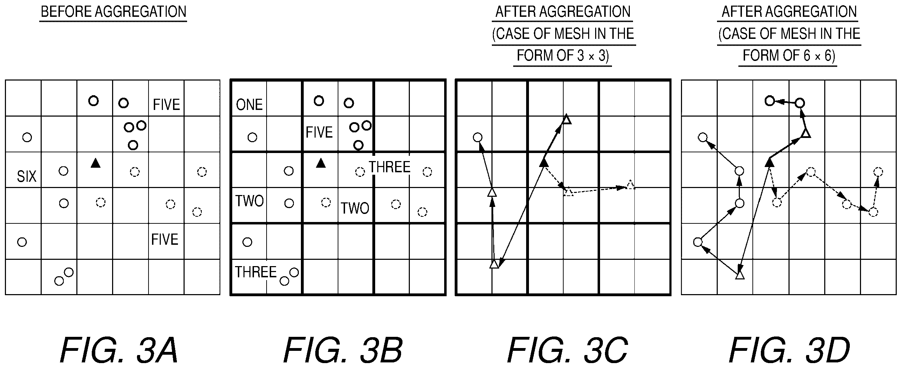

FIGs. 3A to 3D is a diagram showing examples of the mesh and the path generation according to the present embodiment. Similarly to FIGs. 2A and 2B, an example of a mesh in the form of 6 × 6 set on a map is shown. FIG. 3A shows a state before the aggregation. The position indicated by a black triangle in FIGs. 3A to 3D indicates a delivery site of packages (hereinafter, also simply referred to as a "site"). A plurality of delivery destinations around the site are indicated by circles. Here, an example is shown in which the circles are classified into three types of circles (solid line circles, thick line circles, and broken line circles), the number of solid line circles is six, the number of thick line circles is five, and the number of broken line circles is five. These three types of circles indicate allocation situations (assignment) of three delivery persons.

FIG. 3B shows an example in which the mesh in FIG. 3A is adjusted in the form of a unit area of 2 × 2. In this case, the mesh becomes a mesh in the form of 3 × 3. FIG. 3B shows the number of delivery destinations belonging to each unit area of 2 × 2.

FIG. 3C illustrates a state in which the delivery destinations are aggregated in each unit area of 2 × 2 from the state of FIG. 3B. This aggregated state is indicated by a white triangle. Here, a position on the map at the time of aggregation may be a center position of the delivery destinations, and may be a center position of each unit area. Further, in FIG. 3C, delivery paths setting the delivery site as a starting point and corresponding to the aggregated positions are indicated by arrows. Here, a return path from the last delivery destination to the delivery site is omitted.

In FIG. 3D, the delivery destinations are aggregated in a unit area of 1 × 1 in the state of FIG. 3A, that is, in the mesh in the form of 6 × 6, and delivery paths setting the delivery site as the starting point and corresponding to the aggregated positions are indicated by arrows. Here, a return path from the last delivery destination to the delivery site is omitted.

### [Delivery Plan]

In the present embodiment, an initial solution of the delivery plan is derived, and three types of improvement methods and optimization of the delivery cost are applied to the initial solution so as to determine a more suitable delivery plan. The optimization of the delivery cost is, for example, reducing the delivery cost by changing a travel path between two delivery destinations. More specifically, since the cost (the road cost) is different for each road, the delivery cost varies depending on the road on which the delivery vehicle travels at the time of traveling from a certain delivery destination to another delivery destination. The road on which the delivery vehicle travels may be determined by, for example, performing machine learning based on a travel history of an expert driver, and may be determined by the known Dijkstra's algorithm based on a preset road cost.

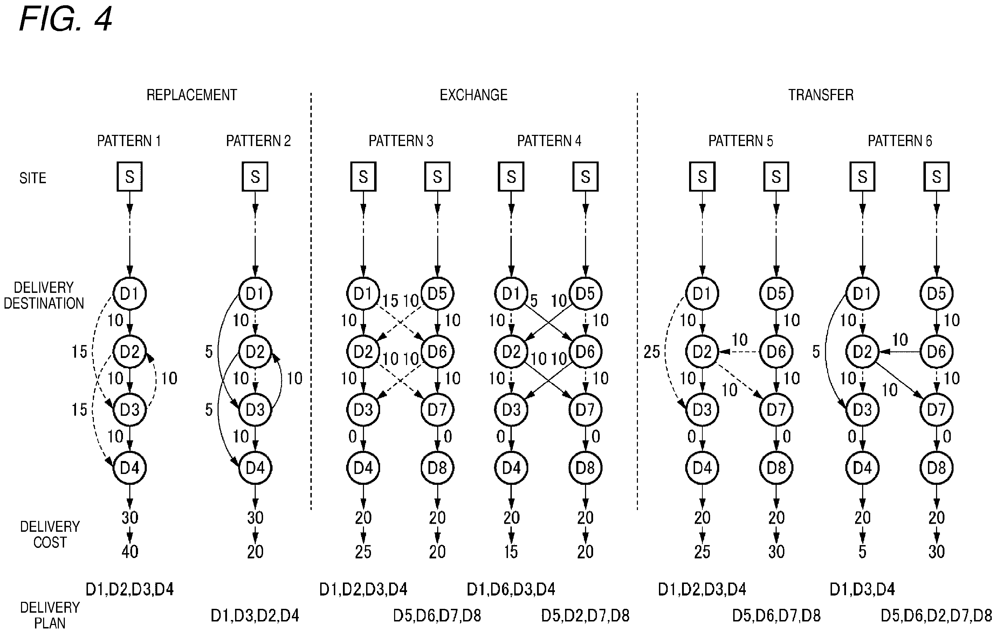

In addition, as the improvement methods of the delivery plan according to the present embodiment, "replacement", "exchange", and "transfer" will be described as examples. The replacement is a process of rearranging the order of delivery destinations. The exchange is a process of rearranging delivery destinations among a plurality of delivery routes. The transfer is a process of transferring a delivery destination to another delivery route. Specific examples of the replacement, the exchange, and the transfer will be described below based on the explanatory diagram in FIG. 4. In a case in which there are two paths for the delivery destinations, a path having a higher cost is represented by a dotted line, and a path having a lower cost is represented by a solid line.

### (Replacement)

In a pattern 1, a delivery plan is set in which the delivery is performed in the delivery order of a site S → a delivery destination D1 → a delivery destination D2 → a delivery destination D3 → a delivery destination D4 by one delivery vehicle. In this case, the delivery cost (in other words, a distance) is "10 + 10 + 10 = 30".

On the other hand, in the pattern 1, a delivery plan is set in which a replacement is performed such that the delivery is performed in the delivery order of the site S → the delivery destination D1 → the delivery destination D3 → the delivery destination D2 → the delivery destination D4 by one delivery vehicle. In this case, the delivery cost is "15 + 10 + 15 = 40". Therefore, the delivery cost becomes larger than that before the replacement, and the replacement is not adopted as a solution of the delivery plan.

In addition, in a pattern 2, the delivery plan is set in which the delivery is performed in the delivery order of the site S → the delivery destination D1 → the delivery destination D2 → the delivery destination D3 → the delivery destination D4 by one delivery vehicle. In this case, the delivery cost is "10 + 10 + 10 = 30".

On the other hand, in the pattern 2, the delivery plan is set in which the replacement is performed such that the delivery is performed in the delivery order of the site S → the delivery destination D1 → the delivery destination D3 → the delivery destination D2 → the delivery destination D4 by one delivery vehicle. In this case, the delivery cost is "5 + 10 + 5 = 20". Therefore, the delivery cost can be reduced, and the replacement is adopted as a solution of the delivery plan.

### (Exchange)

In a pattern 3, the delivery plan is set for a first delivery vehicle in which the delivery is performed in the delivery order of the site S → the delivery destination D1 → the delivery destination D2 → the delivery destination D3 → the delivery destination D4. Further, a delivery plan is set for a second delivery vehicle in which the delivery is performed in the delivery order of the site S → a delivery destination D5 → a delivery destination D6 → a delivery destination D7 → a delivery destination D8. In the case of the delivery plans, the delivery cost of the first delivery vehicle is "10 + 10 + 0 = 20", and the delivery cost of the second delivery vehicle is "10 + 10 + 0 = 20". At this time, the total delivery cost of the two delivery vehicles is "20 + 20 = 40".

On the other hand, in the pattern 3, a delivery plan is set for the first delivery vehicle in which the delivery is performed in the delivery order of the site S → the delivery destination D1 → the delivery destination D6 → the delivery destination D3 → the delivery destination D4. Further, a delivery plan is set for the second delivery vehicle in which the delivery is performed in the delivery order of the site S → the delivery destination D5 → the delivery destination D2 → the delivery destination D7 → the delivery destination D8. In the case of the delivery plans, the delivery cost of the first delivery vehicle is "15 + 10 + 0 = 25", and the delivery cost of the second delivery vehicle is "10 + 10 + 0 = 20". At this time, the total delivery cost of the two delivery vehicles is "20 + 25 = 45". Therefore, the delivery cost becomes larger than that before the exchange, and the exchange is not adopted as a solution of the delivery plan.

Further, in a pattern 4, the delivery plan is set for the first delivery vehicle in which the delivery is performed in the delivery order of the site S → the delivery destination D1 → the delivery destination D2 → the delivery destination D3 → the delivery destination D4. Further, a delivery plan is set for a second delivery vehicle in which the delivery is performed in the delivery order of the site S → a delivery destination D5 → a delivery destination D6 → a delivery destination D7 → a delivery destination D8. In the case of the delivery plans, the delivery cost of the first delivery vehicle is "10 + 10 + 0 = 20", and the delivery cost of the second delivery vehicle is "10 + 10 + 0 = 20". At this time, the total delivery cost of the two delivery vehicles is "20 + 20 = 40".

On the other hand, in the pattern 4, the delivery plan is set for the first delivery vehicle in which the delivery is performed in the delivery order of the site S → the delivery destination D1 → the delivery destination D6 → the delivery destination D3 → the delivery destination D4. Further, a delivery plan is set for the second delivery vehicle in which the delivery is performed in the delivery order of the site S → the delivery destination D5 → the delivery destination D2 → the delivery destination D7 → the delivery destination D8. In the case of the delivery plans, the delivery cost of the first delivery vehicle is "5 + 10 + 0 = 15", and the delivery cost of the second delivery vehicle is "10 + 10 + 0 = 20". At this time, the total delivery cost of the two delivery vehicles is "15 + 20 = 35". Therefore, the delivery cost can be reduced, and the replacement is adopted as a solution of the delivery plan.

### (Transfer)

In a pattern 5, the delivery plan is set for the first delivery vehicle in which the delivery is performed in the delivery order of the site S → the delivery destination D1 → the delivery destination D2 → the delivery destination D3 → the delivery destination D4. Further, a delivery plan is set for a second delivery vehicle in which the delivery is performed in the delivery order of the site S → a delivery destination D5 → a delivery destination D6 → a delivery destination D7 → a delivery destination D8. In the case of this pattern 5, the delivery cost of the first delivery vehicle is "10 + 10 + 0 = 20", and the delivery cost of the second delivery vehicle is "10 + 10 + 0 = 20". At this time, the total delivery cost of the two delivery vehicles is "20 + 20 = 40".

On the other hand, in the pattern 5, a delivery plan is set for the first delivery vehicle in which the delivery is performed in the delivery order of the site S → the delivery destination D1 → the delivery destination D3 → the delivery destination D4. In addition, a delivery plan is set for the second delivery vehicle in which the delivery is performed in the delivery order of the site S → the delivery destination D5 → the delivery destination D6 → the delivery destination D2 → the delivery destination D7 → the delivery destination D8. In the case of this pattern 5, the delivery cost of the first delivery vehicle is "25 + 0 = 25", and the delivery cost of the second delivery vehicle is "10 + 10 + 10 + 0 = 30". At this time, the total delivery cost of the two delivery vehicles is "25 + 30 = 55". Therefore, the delivery cost becomes larger than that before the transfer, and the transfer is not adopted as a solution of the delivery plan.

Further, in a pattern 6, the delivery plan is set for the first delivery vehicle in which the delivery is performed in the delivery order of the site S → the delivery destination D1 → the delivery destination D2 → the delivery destination D3 → the delivery destination D4. Further, a delivery plan is set for a second delivery vehicle in which the delivery is performed in the delivery order of the site S → a delivery destination D5 → a delivery destination D6 → a delivery destination D7 → a delivery destination D8. In the case of this pattern 6, the delivery cost of the first delivery vehicle is "10 + 10 + 0 = 20", and the delivery cost of the second delivery vehicle is "10 + 10 + 0 = 20". At this time, the total delivery cost of the two delivery vehicles is "20 + 20 = 40".

On the other hand, in the pattern 6, the delivery plan is set for the first delivery vehicle in which the delivery is performed in the delivery order of the site S → the delivery destination D1 → the delivery destination D3 → the delivery destination D4. In addition, a delivery plan is set for the second delivery vehicle in which the delivery is performed in the delivery order of the site S → the delivery destination D5 → the delivery destination D6 → the delivery destination D2 → the delivery destination D7 → the delivery destination D8. In the case of this pattern 6, the delivery cost of the first delivery vehicle is "5 + 0 = 5", and the delivery cost of the second delivery vehicle is "10 + 10 + 10 + 0 = 30". At this time, the total delivery cost of the two delivery vehicles is "5 + 30 = 35". Therefore, the delivery cost can be reduced, and the replacement is adopted as a solution of the delivery plan.

### (Problem in Meshes According to Method in Related Art)

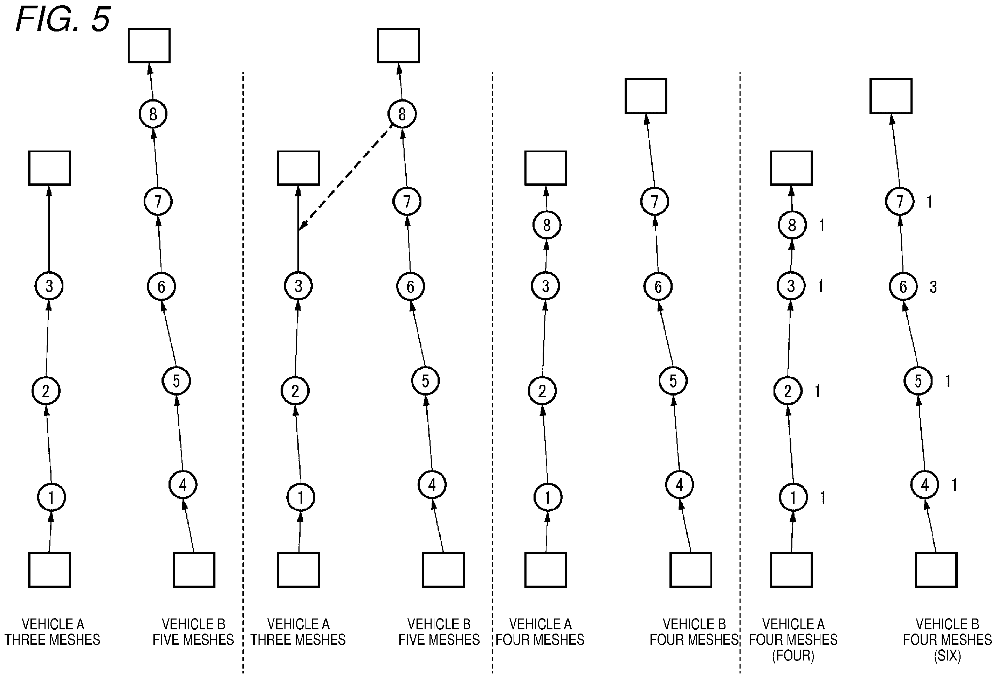

FIG. 5 is a conceptual diagram for explaining a flow of an improvement (here, the transfer) in meshes according to a method in the related art. It is assumed that a process proceeds from the left in FIG. 5 in order. Here, in an example in which two vehicles A and B are used, delivery destinations ("1" to "3") indicated by three meshes are assigned to the vehicle A, and delivery destinations ("4" to "8") indicated by five meshes are assigned to the vehicle B. Here, it is assumed that one delivery person operates one vehicle. In this case, each delivery destination is in a state of being aggregated in a unit area of the mesh. Further, arrows indicate the delivery order.

In this example, it is assumed that the delivery destination "8" is transferred from the vehicle B to the vehicle A. At this time, it is assumed that the delivery order is set such that the delivery destination "8" comes next to the delivery destination "3" for the vehicle A. In this state, at a first glance, four meshes are assigned to each of the vehicles A and B, and it is considered that the delivery destinations are balanced. However, since the delivery destination is a result of aggregation in the unit area of the mesh, the actual number of times of delivery (the total number of delivery destinations) is four for the vehicle A and six for the vehicle B in this example, and the balancing is not sufficiently performed. Although the transfer has been described as an example here, the same problem may occur in the exchange.

### (Improvement in Meshes According to Method of Present Embodiment)

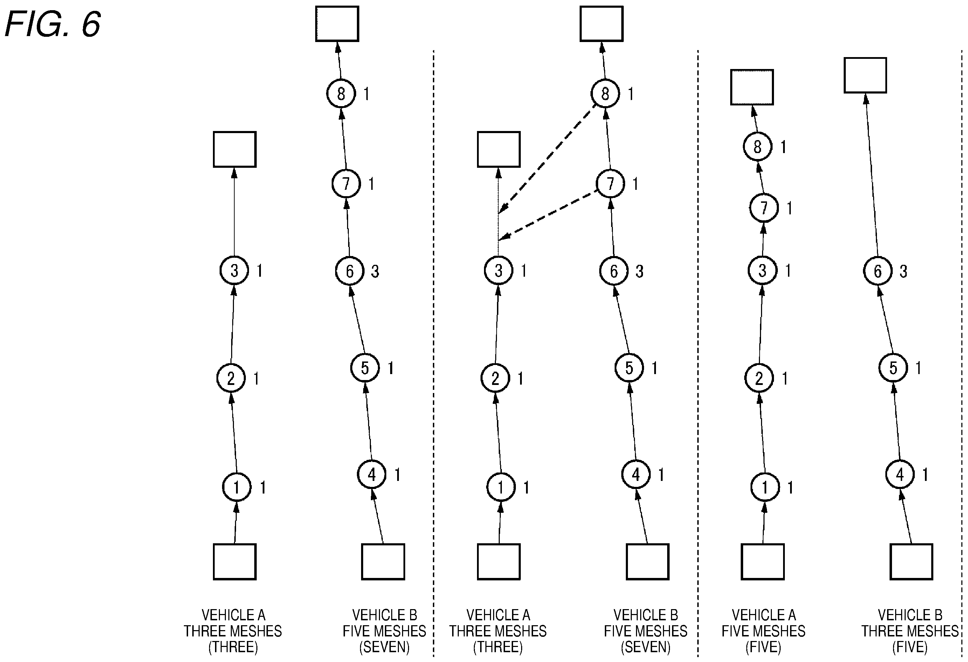

In view of the problem of the balancing in the meshes as described above, in the present embodiment, improvement is performed in consideration of the number of delivery destinations aggregated in the mesh. FIG. 6 is a conceptual diagram for explaining a flow of the transfer in meshes according to a method according to the present embodiment.

It is assumed that a process proceeds from the left in FIG. 6 in order. Here, in an example in which the two delivery vehicles A and B are used, delivery destinations ("1" to "3") indicated by three meshes are assigned to the delivery vehicle A, and delivery destinations ("4" to "8") indicated by five meshes are assigned to the vehicle B. In this case, each delivery destination is in a state of being aggregated in a unit area of the mesh. Further, arrows indicate the delivery order. The number of delivery destinations before the aggregation is indicated near the delivery destination. Therefore, in fact, three delivery destinations are assigned to the vehicle A, and seven delivery destinations are assigned to the vehicle B.

In this example, the delivery destination "7" and the delivery destination "8" are transferred from the vehicle B to the vehicle A. At this time, the delivery order is set such that the delivery destination "7" comes next to the delivery destination "3", and then the delivery destination "8" comes for the vehicle A. In this state, at a first glance, delivery destinations indicated by five meshes are assigned to the vehicle A, delivery destinations indicated by three meshes are assigned to the vehicle B, and it is considered that the balancing is not performed. However, when considered in the number of delivery destinations before the aggregation, the actual number of times of delivery (the total number of delivery destinations) is five for both the vehicle A and the vehicle B in this example, and the balancing is performed.

### [Delivery Plan Generation Process]

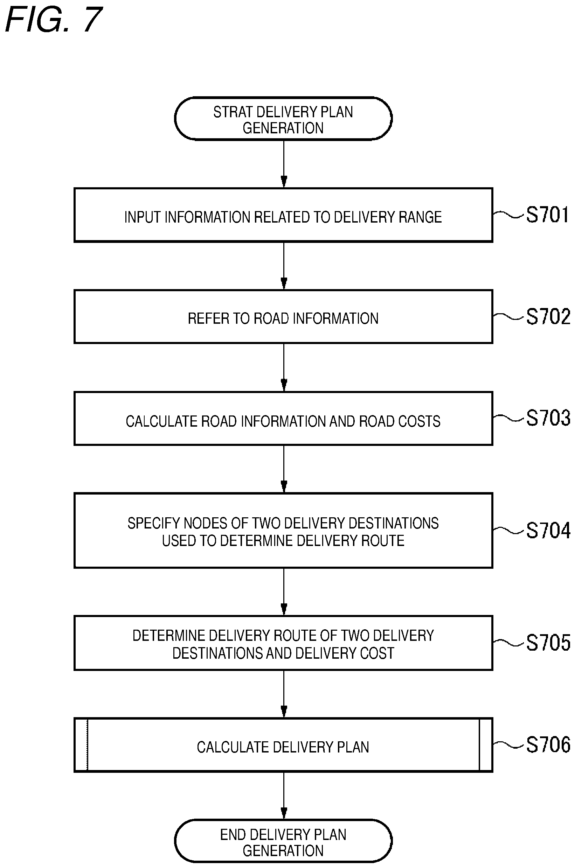

FIG. 7 is a flowchart of a delivery plan generation process executed by the delivery plan generation device 100 according to the present embodiment. This process flow may be implemented by the processing unit 110 of the delivery plan generation device 100 reading and executing a program and data stored in the storage unit 120. Here, in order to simplify the description, a processing body of steps will be collectively described as the delivery plan generation device 100.

The delivery plan generation device 100 receives and inputs information related to the delivery range (step S701). The information related to the delivery range may designate a region or a serving area on the map, and may designate list information on the delivery destinations. Further, the information related to the delivery range may be received from the client terminal 200, and may be input via the UI unit 130.

The delivery plan generation device 100 refers to the road information from the road information DB 121 based on the information input in step S701 (step S702). The road information DB 121 may be timely updated, and the road information in a latest state may be referred to.

The delivery plan generation device 100 calculates the road information referred to in step S702 and road costs corresponding to a plurality of roads included in the delivery range input in step S701 (step S703). The road cost may be defined in advance, and may be changed according to situations such as traffic congestion and construction. Further, the road cost may be set according to a road shape or feature, a traffic regulation, and the like.

The delivery plan generation device 100 sequentially specifies, based on the road information referred to in step S702, nodes of two delivery destinations (including the site) used to determine a delivery route (step S704).

The delivery plan generation device 100 determines the delivery route having the nodes of the two sequentially specified delivery destinations by using a predetermined algorithm, and calculates a delivery cost corresponding to the determined delivery route (step S705). For example, the known Dijkstra's algorithm may be used as the algorithm for determining the delivery route. In the present embodiment, as illustrated in FIG. 3C and FIG. 3D, the delivery route is determined to be one stroke for each unit area assigned to each of the plurality of persons.

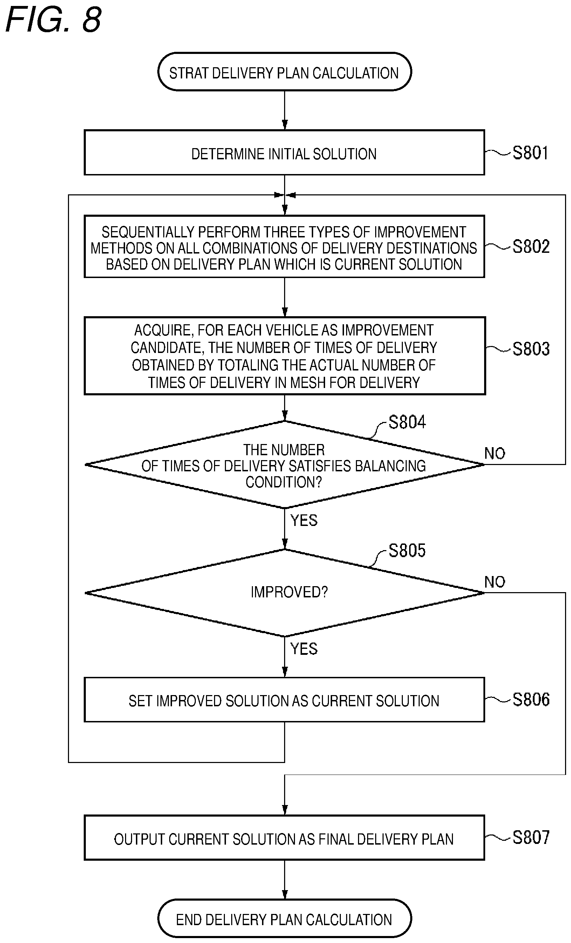

The delivery plan generation device 100 calculates the delivery plan based on the delivery cost determined in step S705 (step S706). Details of this step will be described later with reference to FIG. 8. Then, the process flow ends.

### (Delivery Plan Calculation Process)

FIG. 8 is a flowchart of a delivery plan calculation process according to the present embodiment. This process flow corresponds to step S706 in FIG. 7.

The delivery plan generation device 100 determines the initial solution of the delivery plan by using the delivery cost determined in step S705 in FIG. 7 (step S801). The initial solution of the delivery plan is a delivery plan including the delivery route and the delivery cost determined in step S705. The initial solution may be a delivery plan that is manually formulated by the user of the delivery plan generation device 100 or the client terminal 200 based on the delivery route and the delivery cost determined in step S705.

The delivery plan generation device 100 sequentially performs the above improvement methods on all combinations of the delivery destinations based on the delivery plan which is a current solution (step S802). Here, the current solution is the initial solution determined in step S801, or an improved solution obtained in step S804 in the subsequent stage.

The delivery plan generation device 100 calculates, for each vehicle as an improvement candidate, the actual number of times of delivery (that is, the number of times of delivery before the aggregation) in the mesh for the delivery (step S803).

The delivery plan generation device 100 determines whether a balancing condition is satisfied with respect to the number of times of delivery calculated in step S803 (step S804). The balancing condition is set in advance, and for example, conditions such as a difference in the number of times of delivery of the vehicles is within a predetermined value (for example, "1") may be set. A setting example of the balancing condition will be described later. When the balancing condition is satisfied (step S804; YES), the process performed by the delivery plan generation device 100 proceeds to step S805. On the other hand, when the balancing condition is not satisfied (step S804; NO), the process performed by the delivery plan generation device 100 returns to step S802, and the process is repeated.

The delivery plan generation device 100 determines whether the delivery plan can be improved as a result of performing the three types of improvement methods on all combinations of the delivery destinations in step S802 (step S805). The determination here is performed based on whether the delivery cost is reduced as described above. When the delivery plan can be improved (step S805; YES), the process performed by the delivery plan generation device 100 proceeds to step S806. On the other hand, when the delivery plan cannot be improved (step S805; NO), the process performed by the delivery plan generation device 100 proceeds to step S807.

The delivery plan generation device 100 sets the improved solution as a current solution (step S806). Then, the process performed by the delivery plan generation device 100 returns to step S802, and the process is repeated.

The delivery plan generation device 100 outputs the current solution as a final delivery plan (step S807). The output here may be performed by generating a screen for the delivery plan and outputting the screen on the UI unit 130 of the delivery plan generation device 100, and may be notified to the client terminal 200. Then, the process flow ends.

When a preset time has elapsed after the start of the delivery plan calculation process during the process flow, a solution at that time is output as the delivery plan, and the process flow ends. In this case, a screen indicating interruption during the process flow may be displayed. A setting example of the time here will be described later.

### [UI Screen]

Hereinafter, in the present embodiment, configuration examples of the UI screens configured based on the delivery plan generated by the delivery plan generation device 100 will be described. For example, the UI screens are generated by the screen generation unit 114 of the delivery plan generation device 100, and are provided by being displayed on the UI unit 130 of the delivery plan generation device 100 or the UI unit 204 of the client terminal 200.

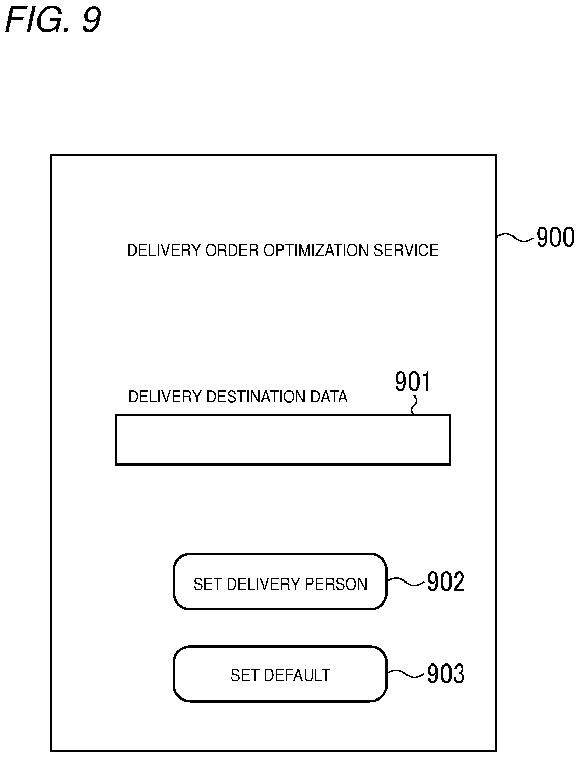

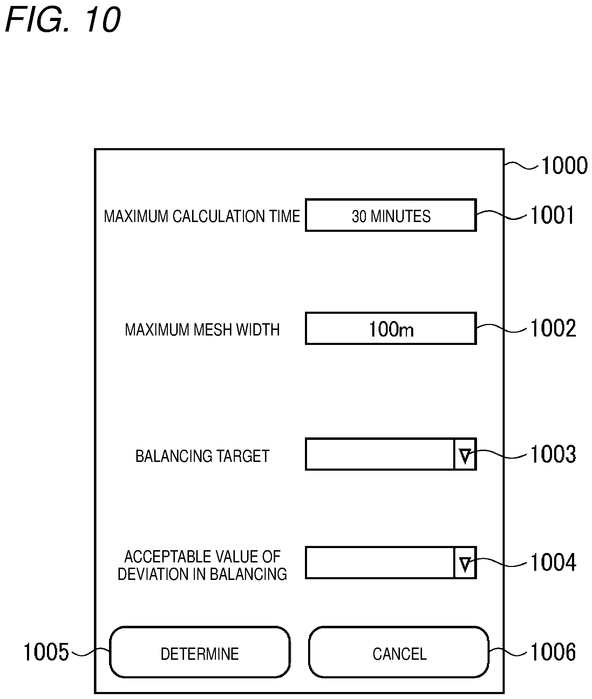

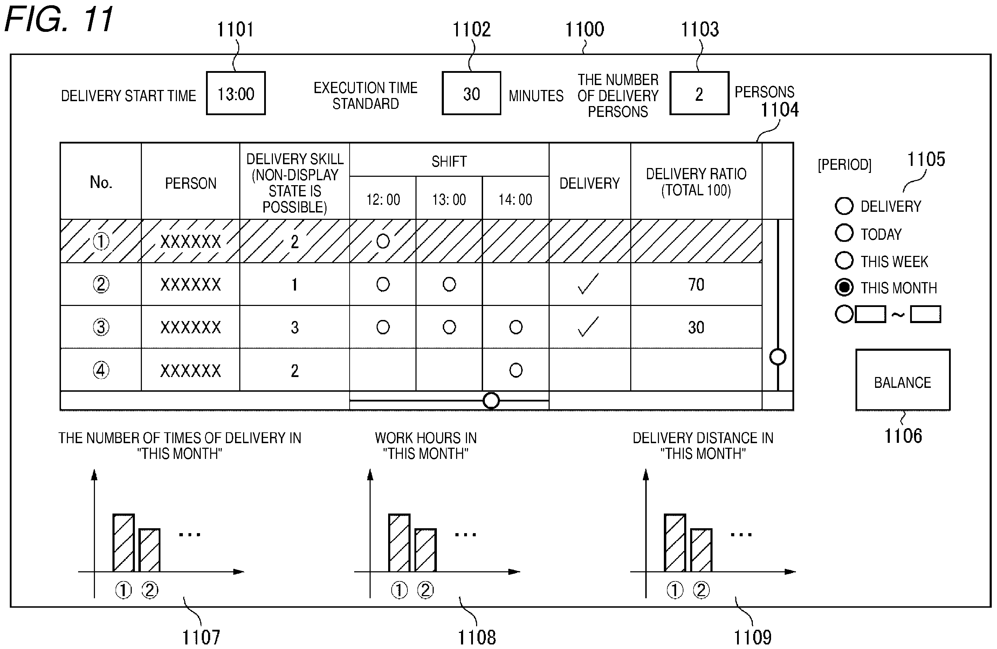

FIG. 9 shows a configuration example of a setting screen 900 to be used when the delivery plan is performed. The setting screen 900 is displayed in step S701 in FIG. 7, for example. An input form 901 is an item for designating delivery destination data. The input form 901 may be capable of listing and receiving the delivery destination data that can be input, and may receive the delivery destination data by designating a predetermined storage destination. The delivery destination data is, for example, list data including information on the delivery destinations, information on the packages, and the like, and corresponds to the information related to the delivery range in step S701. A delivery person setting button 902 is a button for performing setting related to the delivery persons. When the delivery person setting button 902 is pressed, a setting screen 1100 shown in FIG. 11 appears. A default setting button 903 is a button for setting default values of various parameters to be used when the delivery plan is performed. When the default setting button 903 is pressed, a setting screen 1000 shown in FIG. 10 appears.

FIG. 10 shows a configuration example of the setting screen 1000 for setting various parameters to be used when the delivery plan is performed. An input form 1001 is an item for setting a maximum calculation time with reference to a current time. The delivery plan is generated by maximizing the time designated in the input form 1001. Generally, a certain process time is required when the delivery plan is generated, and thus an upper limit value is set in advance here, when the upper limit value is exceeded, the delivery plan generation process is terminated, and a solution at that time is set as the delivery plan. An input form 1002 is an item for setting a maximum mesh width of a unit area (that is, a unit area) in a mesh. In the present embodiment, a rectangular unit area having the same size in vertical and horizontal directions is used. The input forms 1001 and 1002 may allow text input, for example.

An input form 1003 is an item for designating a parameter that is a balancing target. In the example of the process shown in FIG. 8, the "number of times of delivery" is described as an example of the balancing target. However, the balancing target is not limited thereto. For example, the "number of times of delivery", the "number of times of delivery (in the unit area)", the "delivery distance", the "delivery time", and the like may be used as the balancing target. In addition, the "delivery distance", the "delivery time", and the like may be used in combination for the "number of times of delivery" or the "number of times of delivery (in the unit area)". Therefore, the input form 1003 may be capable of listing and receiving the above. In the above example, the "number of times of delivery" indicates a case in which the number of times of delivery before the aggregation is a balancing target, and the "number of times of delivery (in the unit area)" indicates a case in which the number of times of delivery after the aggregation is a balancing target.

An input form 1004 is an item for designating an acceptable value of a difference (deviation) of the assignments when the balancing is performed, and selectable values are switched according to the setting designated in the input form 1003. For example, in a case in which the "number of times of delivery" or the "number of times of delivery (in the unit area)" is designated in the input form 1003, the input form 1004 may be capable of listing and receiving "5", "10", "15", or the like. Similarly, when the "delivery distance" is designated in the input form 1003, the input form 1004 may be capable of listing and receiving "5 km", "10 km", "15 km", or the like. Similarly, when the "delivery time" is designated in the input form 1003, the input form 1004 may be capable of listing and receiving "5 minutes", "10 minutes", "15 minutes", or the like. Alternatively, the acceptable value may be set to a ratio ("5%", "10%", "15%", or the like). In addition, in a case in which the balancing is performed for three or more delivery persons, the acceptable value may be a difference between a delivery person having a maximum assignment and a delivery person having a minimum assignment.

A determination button 1005 is a button for determining setting values input in the setting screen 1000 as default settings. A cancel button 1006 is a button for discarding the setting values input on the setting screen 1000. When the determination button 1005 and the cancel button 1006 are pressed, the setting screen 900 may appear.

FIG. 11 shows a configuration example of the setting screen 1100 for performing the balancing. An input form 1101 is an item for designating a delivery start time of the delivery plan. An input form 1102 designates an execution time for creating the delivery plan. Similar to the input form 1001 in FIG. 10, the delivery plan generation process is executed with the time designated here as a maximum process time.

An input form 1103 is an item in which the number of delivery persons, that is, the number of persons as targets of the balancing is displayed. A delivery person list 1104 may display information related to the delivery persons in a list format, and may be input for each item. An item "No. " indicates identification information for uniquely identifying the delivery person. An item "person" indicates a name of the delivery person. An item "delivery skill" indicates the delivery skill of the delivery person, and here, it is set that as a value increases, the delivery person is more expert. The item "delivery skill" may be switchable to a display state/a non-display state.

An item "shift" indicates a time zone in which each delivery person works. Here, the time zone is shown in units of one hour, but may be displayed by a larger period or a shorter period. Further, the item "shift" may display a further time zone by switching a display range with a slide bar or the like. An item "delivery" is an item for designating the delivery person as the target of the balancing, and a check is shown when the delivery person is selected. The number of selected delivery persons here is displayed in the input form 1103. An item "delivery ratio" is an item for designating a delivery ratio by which the assignment is performed for each of the plurality of selected delivery persons. The total of all delivery ratios is 100 (%).

A setting item 1105 is an item for displaying a delivery prediction period as a balancing result. In this example, the setting item 1105 may be set to "delivery", "today", "this week", "this month", and any period. Here, as a result of selecting the "this month" and pressing a balancing button 1106, the "number of times of delivery", a "work hours", and the "delivery distance" for each delivery person in this month are displayed in graphs 1107, 1108, and 1109 as a result of the balancing. When a past period is included in the period, a part of the above is totaled as work results. When the "delivery" is selected in the setting item 1105 and the balancing button 1106 is pressed, the balancing process and the display of the graphs 1107, 1108, and 1109 are performed for only the delivery destination data designated in the input form 901 of the setting screen 900. In this case, only the delivery person that is selected in the delivery person list 1104, that is, is the target of the balancing may be displayed in the graphs.

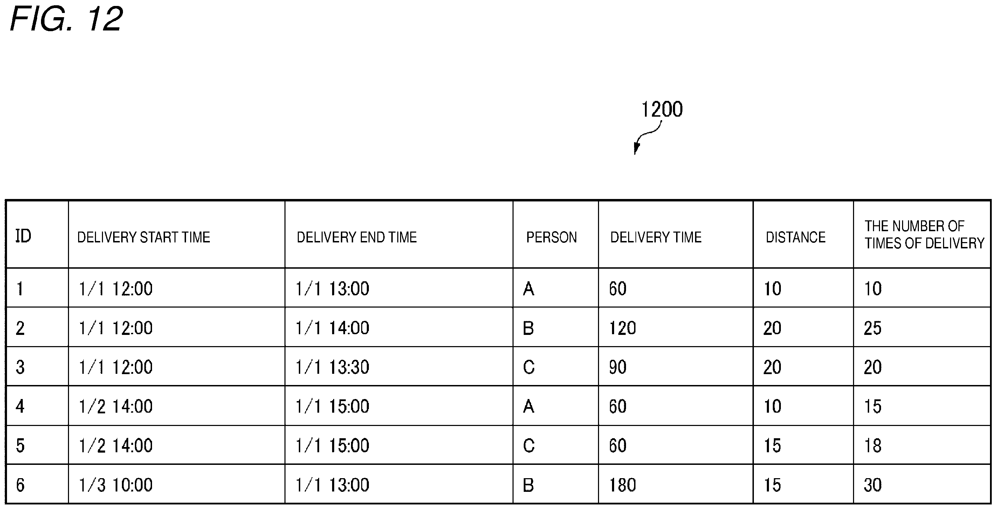

FIG. 12 shows a configuration example of data related to the delivery by the delivery persons. The data here includes items "ID", "delivery start time", "delivery end time", "person", "delivery time", "distance", and "the number of times of delivery". The data may be history data when the delivery is finished, and may be scheduled data when the delivery is not started. When the "today", the "this week", the "this month", or any period is selected in the setting item 1105, the data is used as the work results when the graphs are totaled. The data may be timely updated when the delivery destinations are assigned, when the delivery is finished, and the like, and may be managed by the delivery information DB 122, the person information DB 123, and the like. The configuration of the history data is an example, and the present disclosure is not limited thereto. For example, when there is data required for generating the graphs, other items may be included.

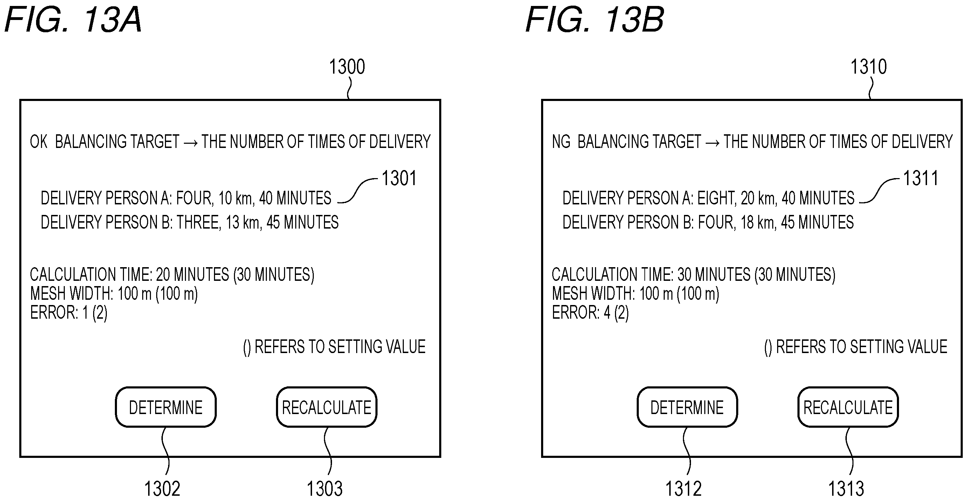

FIGs. 13A and 13B show configuration examples of UI screens indicating a result of performing the balancing process according to the present embodiment by selecting the "delivery" in the setting item 1105 and pressing the balancing button 1106. FIG. 13A shows, as the result of the balancing process, an example of a UI screen 1300 displayed when the balancing is normally performed. FIG. 13B shows, as the result of the balancing process, an example of a UI screen 1310 displayed when the balancing is not normally performed.

Here, an example is described in which the following parameters are designated and used in the setting screen 1000 shown in FIG. 10 as parameters for the balancing. These parameters are displayed together with the result of the balancing process on each screen.

Balancing target: the number of times of delivery (the actual number of times of delivery)
Delivery person: two (a delivery person A and a delivery person B)
Maximum calculation time: 30 minutes
Mesh width: 100 m
Error: 2

As shown in a result 1301 on the UI screen 1300 in FIG. 13A, an error in the number of times of delivery that is balanced and assigned to each delivery person is one, and is equal to or less than two as the parameter for the balancing. Therefore, the balancing is shown as being performed normally. A determination button 1302 is a button to be pressed when this current balancing result is adopted. A recalculation button 1303 is a button to be pressed when the balancing process is performed again.

On the other hand, as shown in a result 1311 on the UI screen 1310 in FIG. 13B, the error in the number of times of delivery that is balanced and assigned to each delivery person is four, and is equal to or more than two as the parameter for the balancing. Therefore, the balancing is shown as not being performed normally. In addition, since the calculation time is 30 minutes and is the same value as 30 minutes as the parameter for the balancing, it is indicated that the balancing process is terminated in the middle. A determination button 1312 is a button to be pressed when this current balancing result is adopted. A recalculation button 1313 is a button to be pressed when the balancing process is performed again.

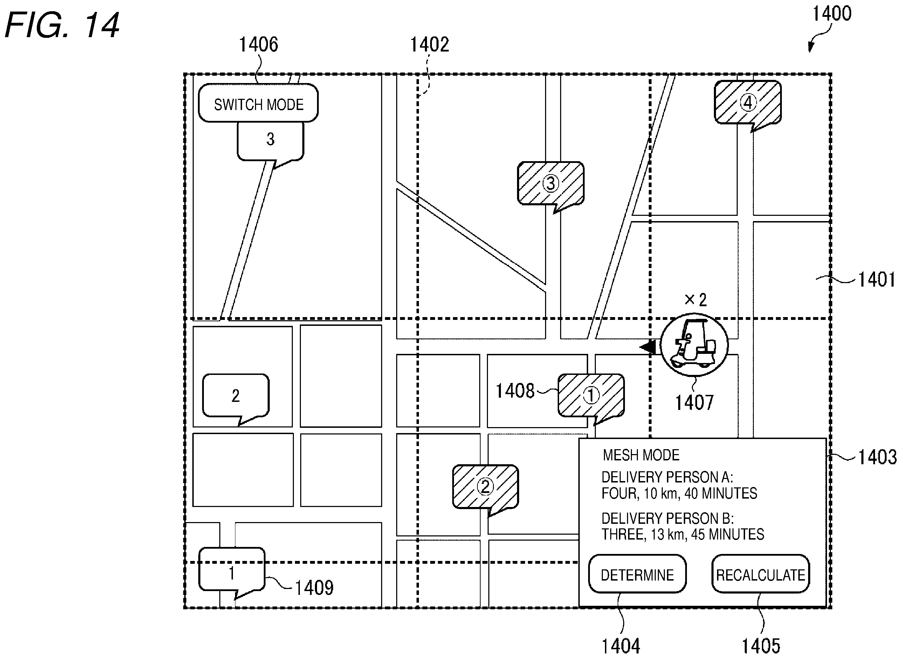

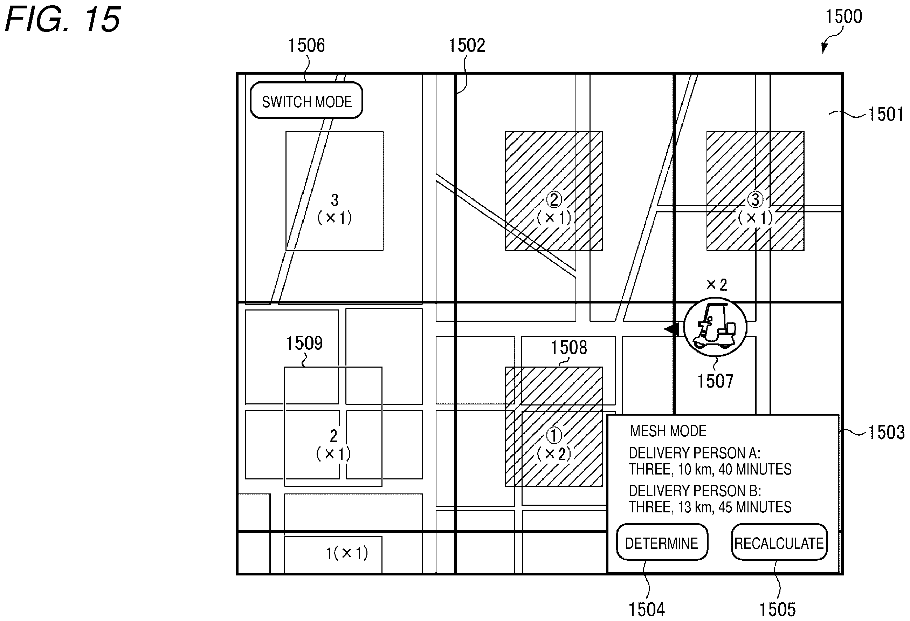

FIG. 14 and FIG. 15 are configuration examples of an UI screen 1400 for displaying the result of the balancing process, and for example, are screens to be displayed on the UI unit 130 of the delivery plan generation device 100 operated by an administrator. For example, the UI screen 1400 may appear when the determination button is pressed on any one of the UI screens in FIGs. 13A and 13B.

FIG. 14 shows a display example (a normal mode) individually indicating the delivery destinations in unit areas of a mesh. On the UI screen 1400, a broken line 1402 indicating the unit areas of the set mesh is superimposed and shown on a map 1401. Assignment information 1403 indicates the result of the balancing process for each delivery person (in this example, the two delivery persons A and B). A determination button 1404 is a button to be pressed when the balancing result is determined and is notified to each delivery person. A recalculation button 1405 is a button to be pressed when the balancing process is performed again. A mode switching button 1406 is a button for switching to a display example (a mesh mode) shown in FIG. 15.

On the UI screen 1400, an icon 1407 indicates the position of the delivery person. In this example, it is assumed that the delivery persons A and B are located at the same position, and "× 2" is shown. The positions of the icons 1407 may also change as the delivery persons (more specifically, the client terminals 200) move. Icons 1408 indicate the positions of the delivery destinations and are indicated by hatching. For example, by operating the icon 1408, the more detailed delivery information (for example, an address of the delivery destination) corresponding thereto may be displayed. Numbers in the icons 1408 indicate the delivery order. Similar to the icons 1408, icons 1409 indicate the positions of the delivery destinations and here are assigned to a different delivery person, and thus the icons 1409 are displayed in a different display format (white blanks in this example) from the hatching.

FIG. 15 shows the display example (the mesh mode) in a state in which the delivery destinations are totaled for each unit area of the mesh. The delivery destinations belonging to each unit area are totaled. On the UI screen 1500, a solid line 1502 indicating the set mesh is superimposed and shown on a map 1501. Assignment information 1503 indicates the result of the balancing process for each delivery person (in this example, the two delivery persons A and B). A determination button 1504 is a button to be pressed when the balancing result is determined and is notified to each delivery person. A recalculation button 1505 is a button to be pressed when the balancing process is performed again. A mode switching button 1506 is a button for switching to the display example (the normal mode) shown in FIG. 14.

On the UI screen 1500, an icon 1507 indicates the position of the delivery person. In this example, it is assumed that the delivery persons A and B are located at the same position, and "× 2" is shown. The positions of the icons 1507 may also change as the delivery persons (more specifically, the client terminals 200) move. Icons 1508 indicate a totaled result (indicated by "(x)") of the delivery destinations belonging to each unit area and the delivery order, and are indicated by hatching. For example, by operating the icons 1508, a list of the more detailed delivery information (for example, addresses of the delivery destinations) corresponding thereto may be displayed. Similar to the icons 1508, icons 1509 indicate the positions of the delivery destinations and here are assigned to a different delivery person, and thus the icons 1509 are displayed in a different display format (white blanks in this example).

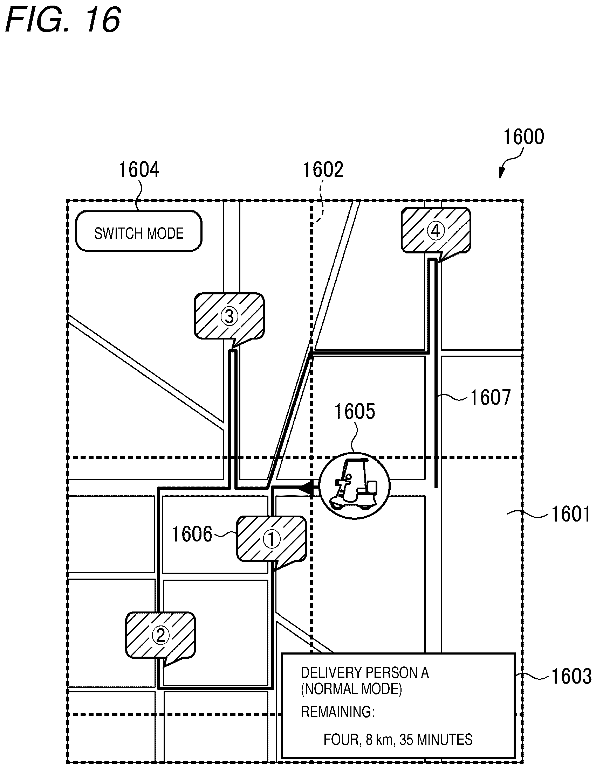

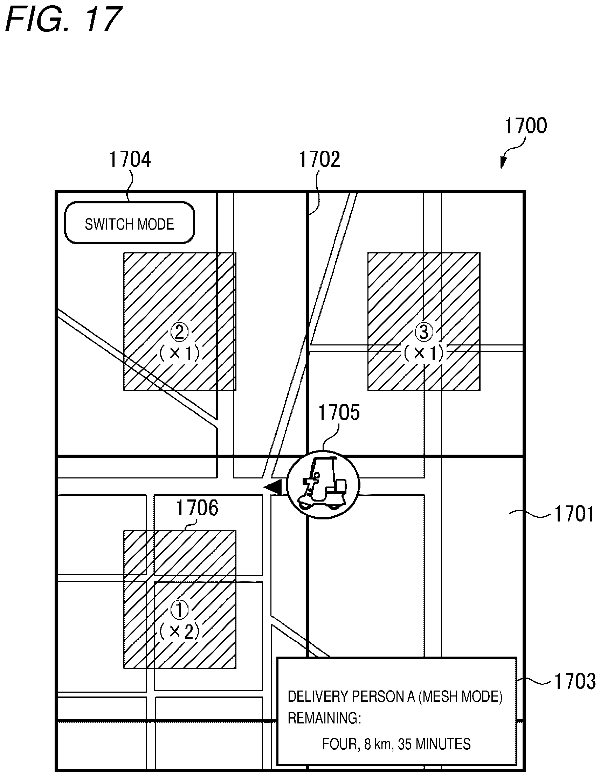

FIG. 16 and FIG. 17 are configuration examples of UI screens for displaying the result of the balancing process, and for example, are screens to be displayed on the UI unit 204 of the client terminal 200 operated by the delivery person A. Here, for convenience, a UI screen 1600 shown in FIG. 16 is also described as a first screen, and a UI screen 1700 shown in FIG. 17 is also described as a second screen. In the description of the present embodiment, the "first" and the "second" are merely used to distinguish and describe different components, and are not intended to be construed as being limited to specific components. For example, when the determination button is pressed on any one of the UI screens shown in FIGs. 13A and 13B, the UI screen 1600 may be displayed by notifying the client terminal 200 carried by the delivery person A of the delivery plan as the balancing result.

FIG. 16 shows an example (the normal mode) in which the delivery destinations assigned to the delivery person A are individually displayed. On the UI screen 1600, a broken line 1602 indicating the set mesh is superimposed and shown on a map 1601. Assignment information 1603 indicates information related to the delivery assigned to the delivery person A. As the information here, the number of times of delivery, a travel distance, a scheduled time required for the delivery, and the like are indicated. A mode switching button 1604 is a button for switching to a display example (the mesh mode) shown in FIG. 17.

On the UI screen 1600, an icon 1605 indicates the position of the delivery person A. The position of the icon 1605 may also change as the delivery person A (more specifically, the client terminal 200) moves. Icons 1606 indicate the positions of the delivery destinations. For example, by operating the icon 1606, the more detailed delivery information (for example, the address of the delivery destination) corresponding thereto may be displayed. Numbers in the icons 1606 indicate the delivery order. A delivery path 1607 indicates a delivery path for the assigned delivery destinations. This path is derived based on the delivery cost as described above.

FIG. 17 shows the display example (the mesh mode) in a state in which the delivery destinations are totaled for each unit area of the mesh. The delivery destinations belonging to each unit area are totaled. On the UI screen 1700, a solid line 1702 indicating the set mesh is superimposed and shown on a map 1701. Assignment information 1703 indicates information related to the delivery assigned to the delivery person A. As the information here, the number of times of delivery, a travel distance, a scheduled time required for the delivery, and the like are indicated. A mode switching button 1704 is a button for switching to a display example (the normal mode) shown in FIG. 16.

On the UI screen 1700, an icon 1705 indicates the position of the delivery person A. The position of the icon 1705 may also change as the delivery person A (more specifically, the client terminal 200) moves. Icons 1706 indicate a totaled result (indicated by "(x)") of the delivery destinations belonging to each unit area and the delivery order. For example, by operating the icons 1706, a list of the more detailed delivery information (for example, addresses of the delivery destinations) corresponding thereto may be displayed.

As described above, the delivery plan generation device 100 according to the present embodiment includes the screen generation unit 114 that provides a setting screen (for example, the setting screen 900, the setting screen 1000, and the setting screen 1100) in which a user inputs a setting item to be used at the time of generating a delivery route of each of a plurality of persons, which is specified by connecting unit areas each including one or more delivery destinations, by repeatedly executing generation of the delivery route of each of the plurality of persons and a process of balancing delivery included in the delivery route of each of the plurality of persons.

Accordingly, it is possible to generate a delivery plan that restrains the deviation in the workloads of the delivery persons while restraining the execution time of the entire delivery by balancing the delivery routes of the packages between the delivery persons.

Further, the setting screen 1000 is capable of designating the maximum calculation time in which the generation of the delivery route and the process of balancing the delivery are repeated.

Accordingly, even when the balancing process having a high processing load is executed, it is possible to terminate the process at a desired process time, and it is possible to restrain the execution of the process longer in time than necessary.

Further, the setting screen 1000 is capable of designating the size of the unit area.

Accordingly, it is possible to perform an aggregation process of the delivery destinations according to the desired size of the unit area, and it is possible to reduce the processing load by performing the generation process of the delivery route at any granularity.

Further, the setting screen 1000 is capable of designating the target of the balancing of the delivery.

Accordingly, a desired target can be designated as the target of the balancing.

Further, the target of the balancing of the delivery is any one of the number of times of delivery, the delivery distance, and the delivery time.

Accordingly, it is possible to perform the balancing by designating any one of the number of times of delivery, the delivery distance, and the delivery time for each unit area.

Further, the setting screen 1000 is capable of designating the acceptable value of the difference in the balancing of the delivery.

Accordingly, it is possible to execute the balancing with desired accuracy and in an acceptable range.

In addition, the screen generation unit 114 further provides the setting screen 1100 in which at least the person to whom the delivery destination is assigned and the period are settable.

Accordingly, it is possible to designate a desired person and period and perform the generation and the balancing of the delivery route.

Further, the setting screen 1100 is capable of displaying, for each item of the balancing, a total value of the result of the balancing for the plurality of persons.

Accordingly, it is possible to easily grasp the total value of the result of the balancing and a total value of a delivery work result, and to execute the balancing according to situations.

Further, the screen generation unit 114 further provides the UI screen 1600 on which the delivery route of the plurality of delivery destinations assigned to the person is superimposed and displayed on the map of the delivery range.

Accordingly, the delivery person can easily grasp the delivery route that is balanced and assigned to the delivery person, and can improve convenience in the delivery.

Further, the screen generation unit 114 further provides the UI screen 1700 on which the number of the plurality of delivery destinations assigned to the person, which is totaled for each unit area, is superimposed and displayed on the map of the delivery range.

Accordingly, the delivery person can simplify and grasp the delivery balanced and assigned to the delivery person for each unit area.

Further, a program and a storage medium by which a program for achieving the functions of the device according to the above embodiment is supplied to the device via a network or various storage media, and is read and executed by a computer in the device are also in an application range of the present disclosure.

Although various embodiments have been described above with reference to the drawings, it is needless to say that the present disclosure is not limited to such examples. It is apparent to a person skilled in the art that various modifications, corrections, substitutions, additions, deletions, and equivalents can be conceived within the scope described in the claims, and it is understood that such modifications, corrections, substitutions, additions, deletions, and equivalents also fall within the technical scope of the present disclosure. In addition, the components in the various embodiments described above may be combined freely in a range without deviating from the spirit of the invention.

Although various embodiments have been described above, it is needless to say that the present invention is not limited to these embodiments. It is apparent that a person skilled in the art can conceive of various modifications or corrections within the scope described in the claims, and it is understood that such modifications or corrections naturally fall within the technical scope of the present invention. In addition, the components in the above embodiment may be freely combined in a range without deviating from the spirit of the invention.

The present application is based on Japanese Patent Application No. 2022-067717 filed on April 15, 2022, and the contents thereof are incorporated herein by reference.

### INDUSTRIAL APPLICABILITY

The present disclosure is useful as a delivery plan generation device and a delivery plan generation method that effectively support formulating of an optimal delivery plan of packages in accordance with a situation of a road to delivery destinations in delivery of the packages, and significantly reduce a burden on a delivery person who delivers the packages.

### REFERENCE SIGNS LIST

100 delivery plan generation device
110 processing unit
111 road cost calculation unit
112 delivery cost generation unit
113 delivery plan calculation unit
114 screen generation unit
115 DB management unit
116 data association unit
120 storage unit
121 road information DB
122 delivery information DB
123 person information DB
130 UI unit
140 communication unit
200 client terminal
201 processing unit
202 storage unit
203 communication unit
204 UI unit
205 sensor unit
300 network
900, 1000, 1100 setting screen
1300, 1310, 1400, 1500, 1600, 1700 UI screen

## Claims

1. A delivery plan generation device that divides a delivery range into predetermined unit areas and generates a delivery route of each of a plurality of persons to whom delivery destinations of articles are assigned, the delivery plane generation device comprising:
a providing unit that provides a setting screen on which a user inputs a setting item to be used at the time of generating the delivery route of each of the plurality of persons, which is specified by connecting unit areas each including one or more delivery destinations, by repeatedly executing the generation of the delivery route of each of the plurality of persons and a process of balancing delivery included in the delivery route of each of the plurality of persons.

2. The delivery plan generation device according to claim 1, wherein
the setting screen is capable of designating a maximum calculation time in which the generation of the delivery route and the process of balancing the delivery are repeated.

3. The delivery plan generation device according to claim 1, wherein
the setting screen is capable of designating a size of the unit area.

4. The delivery plan generation device according to claim 1, wherein
the setting screen is capable of designating a target of the balancing of the delivery.

5. The delivery plan generation device according to claim 4, wherein
the target of the balancing of the delivery is any one of the number of times of delivery, a delivery distance, and a delivery time.

6. The delivery plan generation device according to claim 1, wherein
the setting screen is capable of designating an acceptable value of a difference in the balancing of the delivery.

7. The delivery plan generation device according to claim 1, wherein
the providing unit further provides a second setting screen on which at least the person to whom the delivery destination is assigned and a period are settable.

8. The delivery plan generation device according to claim 7, wherein
the second setting screen is capable of displaying, for each item of the balancing, a total value of a result of the balancing for the plurality of persons.

9. The delivery plan generation device according to claim 1, wherein
the providing unit further provides a first screen on which a delivery route of a plurality of delivery destinations assigned to a person is superimposed and displayed on a map of the delivery range.

10. The delivery plan generation device according to claim 1, wherein
the providing unit further provides a second screen on which the number of a plurality of delivery destinations assigned to a person, which is totaled for each unit area, is superimposed and displayed on a map of the delivery range.

11. A delivery plan generation method that divides a delivery range into predetermined unit areas and generates a delivery route of each of a plurality of persons to whom delivery destinations of articles are assigned, wherein
a processor and a memory cooperate to provide
a setting screen on which a user inputs a setting item to be used at the time of generating the delivery route of each of the plurality of persons, which is specified by connecting unit areas each including one or more delivery destinations, by repeatedly executing the generation of the delivery route of each of the plurality of persons and a process of balancing delivery included in the delivery route of each of the plurality of persons.
